# EUROPEAN PATENT SPECIFICATION

(11) **EP 2 861 954 B1**
(45) Date of publication and mention of the grant of the patent: **10.10.2018**
(21) Application number: 13730170.1
(22) Date of filing: 12.06.2013
(51) Int. Cl.: G01M 11/08, C03C 27/04, G01M 13/04, G01L 1/24

(54) **MACHINE ARRANGEMENT**
MASCHINENANORDNUNG
SYSTÈME DE MACHINE

(30) Priority: 15.06.2012 WO PCT/EP2012/061407
(43) Date of publication of application: 22.04.2015
(73) Proprietor: Aktiebolaget SKF, 415 50 Göteborg (SE)
(72) Inventor: MOL, Hendrik, Anne, NL-4254 XG Sleeuwijk (NL); SANDEN, VAN DE, John, NL-3435 DT Nieuwegein (NL); YANG, Hongyu, NL-3893 EW Zeewolde (NL)
(74) Representative: Kuhstrebe, Jochen
(86) International application number: PCT/EP2013/062145
(87) International publication number: WO 2013/186258

(56) References cited:
- JP-A- S6 369 734
- US-A1- 2002 118 908
- US-A1- 2010 158 434

## Description

### Technical Field

The invention relates to a machine arrangement, comprising or being at least one bearing ring, wherein a glass fiber is connected with the machine arrangement.

### Background

It is known in the art to equip a machine part of this kind with a glass fiber element to allow the measurement of different physical parameters. By doing so, a survey of the parameters becomes possible by using the fiber Bragg grating (FBG) method. By this method temperatures as well as strains of the machine arrangement can be monitored.

Prior art monitoring and glass fiber connection methods are disclosed in US2010/0158434, US2002/0118908 and JPS6369734. For doing so it is necessary to connect a glass fiber with the component. For surveying temperatures it is essential that a thermal coupling between the glass fiber and the machine arrangement is established. For monitoring strains it is necessary to mechanically connect the glass fiber with the component to be monitored.

Specifically in the latter case problems arise because the glass fiber is normally equipped with a plurality of coaxially arranged cover layers. A typical construction employs a cladding arranged around the glass fiber (core) itself; the cladding is coated by a coating layer. Then, strengthening fibers (made e. g. from aramid) are arranged at the outer circumference of the coating. Finally the strengthening fibers are cased by a hollow cylindrical cable jacket.

When a glass fiber element of this type is connected with the component a certain elasticity is immanent between the glass core and the component. Thus, specifically the measurement of strains is problematic due to the elasticity. This is specifically a problem when the component is not even or flat but if it has a spherical shape. This is typical in the case of a part of a bearing, specifically of a roller bearing.

It is an object of the present invention to propose a machine arrangement of the above mentioned kind which is designed in such a manner that a contact is established between the glass fiber core and the component which is as stiff as possible. By doing so it is aimed to monitor physical properties, especially of strains in the component, with a high degree of precision. Thus, specifically a proper measurement of stresses should become possible even at curved surfaces of the machine arrangement as it is typical in the case of bearing rings.

### Summary of the invention

A solution according to the invention is characterized in that the connection between the glass fiber and the machine arrangement is established by a glass material which glass material is connected by material bonding with the machine arrangement as well as with the glass fiber.

The glass fiber is basically free from any layer as described above. An exception can be that the glass fiber is encased by a reflective cover material to ensure the conduction of light through the glass fiber. Here, a specific solution suggests that the reflective cover material is a second glass material, wherein the refractive index of the glass fiber is different from the refractive index of the second glass material. Insofar, the glass fiber has then some kind of cladding to keep that light in the glass fiber. This cladding is then fused to the substrate.

The material bonded connection between the glass material and the machine arrangement can be established by a welding process using the glass material.

The material bonded connection between the glass material and the glass fiber can also be established by a welding or melting process using the glass material.

The glass material can have at least partially a thickness measured in the direction perpendicular to the longitudinal axis of the glass fiber of at least 0.3 mm, preferably of at least 0.5 mm.

The glass fiber can be arranged on a curved surface of the machine arrangement, especially on a cylindrical surface of a bearing ring.

Thereby, the glass fiber can be attached to a cylindrical surface of the machine arrangement. Also, it is possible to locate the glass fiber in a groove which is machined for the glass fiber into the machine arrangement.

By the proposed design a stiff and direct connection is established between the glass fiber and the component to be monitored so that physical parameters - especially temperatures and strains - can be detected in a precise way.

### Brief description of the drawings

The drawings show an embodiment of the invention.
- Fig. 1: shows in a perspective view a section of a outer bearing ring of a roller bearing, on which a glass fiber is fixed and
- Fig. 2: shows the cross section A-A according to Fig. 1.

### Detailed description of the invention

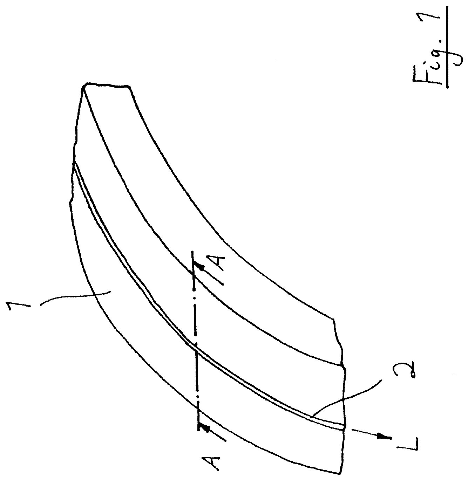

In Fig. 1 a machine arrangement 1 being an outer bearing ring of a roller bearing is shown. The bearing ring 1 has an outer spherical surface which is to be monitored with respect to strains which act in the machine part. The survey of those strains is carried out by the fiber Bragg grating (FBG) method which is known as such. Reference is made e. g. to US 6,923,048 B2 where this technology is explained in more detail.

For doing so a glass fiber 2 is securely fixed on the spherical, i. e. cylindrical outer circumference of the bearing ring 1. The glass fiber 2 has a longitudinal direction L which extends in the circumferential direction of the bearing ring 1.

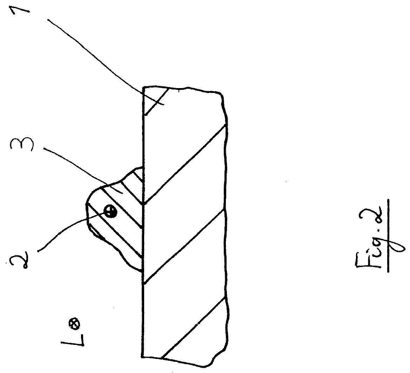

Details concerning the fixation of the glass fiber 2 at the bearing ring 1 can be seen from Fig. 2.

Here, it can be seen that the glass fiber 2 is basically the pure glass element - possibly covered only by a reflective coating to ensure proper light conduction within the glass fiber - which is then connected with the bearing ring 2 by means of glass material 3.

Thus, a material bonding is established between the glass fiber 2 and the machine part 1 to be monitored. This means, all strains in the machine part 1 are directly transferred into the glass fiber 2. Thus, the precondition is assured for a precise measurement of physical parameters of the machine part 1.

### Reference Numerals:

- 1: Machine arrangement (bearing ring)
- 2: Glass fiber
- 3: Glass material

- L: Longitudinal axis

## Claims

1. Machine arrangement (1), comprising or being at least one bearing ring, wherein a glass fiber (2) is connected with the machine arrangement (1),
**characterized in that**
the connection between the glass fiber (2) and the machine arrangement (1) is established by a glass material (3) which glass material (3) is connected by material bonding with the machine arrangement (1) as well as with the glass fiber (2), wherein the glass fiber (2) is connected with the machine arrangement (1) by encasing the whole circumference of the glass fiber (2) with the glass material (3) along at least a part of the longitudinal axis of the glass fiber (2).

2. Machine arrangement according to claim 1, **characterized in that** the glass fiber (2) is encased by a reflective cover material.

3. Machine arrangement according to claim 2, **characterized in that** the reflective cover material is a second glass material, wherein the refractive index of the glass fiber is different from the refractive index of the second glass material.

4. Machine arrangement according to one of claims 1 to 3, **characterized in that** the material bonded connection between the glass material (3) and the machine arrangement (1) is established by a welding process using the glass material (3).

5. Machine arrangement according to one of claims 1 to 3, **characterized in that** the material bonded connection between the glass material (3) and the glass fiber (2) is established by a welding or melting process using the glass material (3).

6. Machine arrangement according to one of claims 1 to 5, **characterized in that** the glass material (3) has at least partially a thickness measured in the direction perpendicular to the longitudinal axis (L) of the glass fiber (2) of at least 0.3 mm, preferably of at least 0.5 mm.

7. Machine arrangement according to one of claims 1 to 6, **characterized in that** the glass fiber (2) is arranged on a curved surface of the machine arrangement (1), especially on a cylindrical surface of a bearing ring.

## Patentansprüche

1. Maschinenanordnung (1), die einen Lagerring umfasst oder wenigstens ein Lagerring ist, wobei eine Glasfaser (2) mit der Maschinenanordnung (1) verbunden ist,
**dadurch gekennzeichnet, dass**
die Verbindung zwischen der Glasfaser (2) und der Maschinenanordnung (1) durch ein Glasmaterial (3) hergestellt ist, wobei das Glasmaterial (3) sowohl mit der Maschinenanordnung (1) als auch mit der Glasfaser (2) durch Materialbonding verbunden ist, wobei die Glasfaser (2) durch Ummanteln des gesamten Umfangs der Glasfaser (2) mit dem Glasmaterial (3) entlang wenigstens einem Teil der Längsachse der Glasfaser (2) mit der Maschinenanordnung (1) verbunden ist.

2. Maschinenanordnung nach Anspruch 1, **dadurch gekennzeichnet, dass** die Glasfaser (2) von einem reflektierenden Abdeckmaterial ummantelt ist.

3. Maschinenanordnung nach Anspruch 2, **dadurch gekennzeichnet, dass** das reflektierende Abdeckmaterial ein zweites Glasmaterial ist, wobei sich der Brechungsindex der Glasfaser von dem Brechungsindex des zweiten Glasmaterials unterscheidet.

4. Maschinenanordnung nach einem der Ansprüche 1 bis 3, **dadurch gekennzeichnet, dass** die materialgebondete Verbindung zwischen dem Glasmaterial (3) und der Maschinenanordnung (1) durch einen Schweißvorgang unter Verwendung des Glasmaterials (3) hergestellt ist.

5. Maschinenanordnung nach einem der Ansprüche 1 bis 3, **dadurch gekennzeichnet, dass** die materialgebondete Verbindung zwischen dem Glasmaterial (3) und der Glasfaser (2) durch einen Schweiß- oder Schmelzvorgang unter Verwendung des Glasmaterials (3) hergestellt ist.

6. Maschinenanordnung nach einem der Ansprüche 1 bis 5, **dadurch gekennzeichnet, dass** das Glasmaterial (3) wenigstens zum Teil eine Dicke aufweist, die, gemessen in der rechtwinklig zu der Längsachse (L) der Glasfaser (2) verlaufenden Richtung, wenigstens 0,3 mm, vorzugsweise wenigstens 0,5 mm beträgt.

7. Maschinenanordnung nach einem der Ansprüche 1 bis 6, **dadurch gekennzeichnet, dass** die Glasfaser (2) auf einer gekrümmten Fläche der Maschinenanordnung (1), insbesondere auf einer zylindrischen Fläche eines Lagerrings, angeordnet ist.

## Revendications

1. Système de machine (1), comprenant ou étant au moins une bague de roulement,
une fibre de verre (2) étant reliée au système de machine (1),
**caractérisé en ce que**
la liaison entre la fibre de verre (2) et le système de machine (1) est établie par un matériau de verre (3), ledit matériau de verre (3) étant relié par liaison de matière avec le système de machine (1) ainsi qu'avec la fibre de verre (2), la fibre de verre (2) étant reliée au système de machine (1) en entourant toute la circonférence de la fibre de verre (2) avec le matériau de verre (3) le long d'au moins une partie de l'axe longitudinal de la fibre de verre (2).

2. Système de machine selon la revendication 1, **caractérisé en ce que** la fibre de verre (2) est entourée d'un matériau de recouvrement réfléchissant.

3. Système de machine selon la revendication 2, **caractérisé en ce que** le matériau de recouvrement réfléchissant est un second matériau de verre, l'indice de réfraction de la fibre de verre étant différent de l'indice de réfraction du second matériau de verre.

4. Système de machine selon l'une des revendications 1 à 3, **caractérisé en ce que** la liaison de matière entre le matériau de verre (3) et le système de machine (1) est établie par un procédé de soudage utilisant le matériau de verre (3).

5. Système de machine selon l'une des revendications 1 à 3, **caractérisé en ce que** la liaison de matière entre le matériau de verre (3) et la fibre de verre (2) est établie par un procédé de soudage ou de fusion utilisant le matériau de verre (3).

6. Système de machine selon l'une des revendications 1 à 5, **caractérisé en ce que** le matériau de verre (3) a au moins partiellement une épaisseur mesurée dans la direction perpendiculaire à l'axe longitudinal (L) de la fibre de verre (2) d'au moins 0,3 mm, de préférence d'au moins 0,5 mm.

7. Système de machine selon l'une des revendications 1 à 6, **caractérisé en ce que** la fibre de verre (2) est disposée sur une surface incurvée du système de machine (1), en particulier sur une surface cylindrique d'une bague de roulement.
